# EUROPÄISCHE PATENTSCHRIFT

(11) **EP 3 221 685 B1**
(45) Veröffentlichungstag und Bekanntmachung des Hinweises auf die Patenterteilung: **07.04.2021**
(21) Anmeldenummer: 15808346.9
(22) Anmeldetag: 20.11.2015
(51) Int. Cl.: G01N 15/02, G01N 15/00, G01N 15/06

(54) **VERFAHREN UND SYSTEM ZUR MESSUNG VON VERSCHIEDENEN PARTIKELKONZENTRATIONEN**
METHOD AND SYSTEM FOR MEASURING SEVERAL PARTICLE CONCENTRATIONS
PROCÉDÉ ET SYSTÈME POUR LA MESURE DE PLUSIEUR CONCENTRATIONS DE PARTICULES

(30) Priorität: 21.11.2014 DE 102014017220
(43) Veröffentlichungstag der Anmeldung: 27.09.2017
(73) Patentinhaber: Iglseder, Heinrich, 31552 Rodenberg (DE)
(72) Erfinder: IGLSEDER, Heinrich, 31552 Rodenberg (DE)
(74) Vertreter: Börjes-Pestalozza, Henrich
(86) Internationale Anmeldenummer: PCT/EP2015/002326
(87) Internationale Veröffentlichungsnummer: WO 2016/078768

(56) Entgegenhaltungen:
- EP-A2- 1 158 292
- WO-A1-2013/022971
- US-A- 3 787 122
- US-A1- 2003 090 656
- US-A1- 2013 248 693
- Michael Thompson: "Nephelometer Operating Procedure Air Quality Program", , 1. Dezember 2008 (2008-12-01), Seiten 1-20, XP055257768, Gefunden im Internet: URL:https://fortress.wa.gov/ecy/publicatio ns/publications/0102001.pdf [gefunden am 2016-03-11]
- NORBERT RIEFLER ET AL: "Intercomparison of Inversion Algorithms for Particle-Sizing Using Mie Scattering", PARTICLE AND PARTICLE SYSTEMS CHARACTERIZATION., Bd. 25, Nr. 3, 1. September 2008 (2008-09-01), Seiten 216-230, XP055287516, DE ISSN: 0934-0866, DOI: 10.1002/ppsc.200700039
- BLACK D L ET AL: "Laser-based techniques for particle-size measurement: a review of sizing methods and their industrial applications", PROGRESS IN ENERGY AND COMBUSTION SCIENCE, ELSEVIER SCIENCE PUBLISHERS, AMSTERDAM, NL, Bd. 22, Nr. 3, 1. Januar 1996 (1996-01-01) , Seiten 267-306, XP004068954, ISSN: 0360-1285, DOI: 10.1016/S0360-1285(96)00008-1

## Beschreibung

Die Erfindung betrifft mindestens ein Verfahren zur Messung von verschiedenen Partikelkonzentrationen, gemäß Anspruch 1.

Die Erfindung betrifft weiterhin eine Vorrichtung zur simultanen Messung und Anzeige von verschiedenen Partikelkonzentrationen, gemäß Anspruch 7.

In urbanen und industriellen Bereichen werden durch Verbrennungsprozesse sehr hohe Feinstaubkonzentrationen generiert. Mitunter sind die Werte so hoch (> 100 bis 200 µg/m³), dass ein dauerhafter Aufenthalt in solchen Bereichen gesundheitsschädlich ist. Die Städte Peking und Shanghai wurden bereits von der WHO als nicht mehr bewohnbare Bereiche eingestuft. Versucht man diverse Feinstaubkonzentration genau zu messen, z. B. mit 1 bis 2 µg/m³ Auflösung, stellt man fest, dass dies mit sehr hohem Aufwand und Kosten verbunden ist (Euro 3.000,- bis 30.000,-). Fotometrische und gravimetrische Systeme haben sich durchgesetzt. Die Messprinzipien eines Streulichtphotometers oder gravimetrischen Messsystems sind mittlerweile Stand der Technik. Es gibt zahlreiche Firmen wie Apollo, Honeywell, Sharp, Shinjei und andere, die OEM-Sensoren auf Basis der Streulichtmethode zu relativ geringen Kosten (Euro 10,- bis 20,-) anbieten. Die Genauigkeit dieser OEM-Sensoren liegt bei etwa 25 bis 100 µg/m3. Damit kann man Raumluftreiniger steuern, die bei Konzentrationen von 50 bis 100 g/m3 mit der Reinigung beginnen und bei etwa 20µg/m3 wieder abschalten. Namhafte Marken haben bereits Raumluftreiniger mit solchen Sensoren ausgestattet. Eine genauere dauerhaft zuverlässige Bestimmung der Feinstaubkonzentration ist derzeit jedoch damit nicht möglich. Da aber ein großer Bedarf für eine kostengünstige Bestimmung der Feinstaubkonzentrationen besteht und um die Gesundheit der Lebewesen zu schützen, wurde ein neues preiswertes Verfahren zum Nachweis der so genannten "Particulate Matter" kurz PM entwickelt. Üblich sind die Bestimmungen von PM1 .0, PM2.5 und PM10 mit mittleren Partikelgrößen von 1.0µm, 2.5µm und 10 µm. Dieses Verfahren lässt nicht nur die Bestimmung einer Fraktion wie z.B. der wichtigen PM2.5 zu, sondern auch eine simultane Bestimmung von mehreren Fraktionen wie z.B. PM1 .0, PM2.5 und PM10. Die Auflösungsgrenze von Partikeln liegt bei etwa 0,3 µm. Selbst die genaue Bestimmung von einer PM0.5 ist damit sicher und zuverlässig möglich. Eine Genauigkeit von wenigen µg/m³ im Messbereich bis 100 µ/m³ lässt sich damit erzielen.

Der Erfindung liegt die Aufgabe zugrunde, wenigstens ein Verfahren der eingangs genannten Gattung aufzuzeigen, mit dem die Messung von verschiedenen Partikelkonzentrationen, insbesondere Feinstaubkonzentrationen, verbessert wird. Weiterhin soll eine Vorrichtung zur simultanen Messung und Anzeige von verschiedenen Partikelkonzentrationen, insbesondere Feinstaubkonzentrationen, aufgezeigt werden, die vorzugsweise für die Durchführung dieses Verfahrens geeignet ist. Die Aufgabe wird gelöst durch die Verfahren nach den Ansprüchen 1 und 9 und eine Vorrichtung nach den Ansprüchen 16 und 19. Vorteilhafte Ausführungen finden sich in den abhängigen Ansprüchen.

Hinsichtlich eines Verfahrens ist die Aufgabe erfindungsgemäß dadurch gelöst, dass die Streulichteinheit mit Messvolumen hermetisch abgedichtet wird. In einem ersten Schritt bleiben hier wenigstens ein Fluideinlass und/oder wenigstens ein Fluidauslass, welche mit Absperreinrichtungen versehen sind, davon ausgenommen und geöffnet, die Streulichteinheit mit ihrem Messvolumen wird kontrolliert mit einer Probe des zu untersuchenden Fluides beaufschlagt, und eine vorbestimmbare erste Anzahl von Messwerten wird aufgenommen. Das Aufnehmen der ersten Anzahl von Messwerten erfolgt wiederholt, insbesondere fortlaufend, solange die Messung durchgeführt wird.

Durch das hermetische Abdichten der Streulichteinheit wird verhindert, dass unerwünschte Partikel durch Spalten oder Ritzen im Gehäuse der Streulichteinheit in das Messvolumen eindringen und dort das zu untersuchende Fluid kontaminieren, welches ausschließlich und kontrolliert über den Fluideinlass bzw. Auslass in die Streulichteinheit gelangen oder diese verlassen kann. Bereits ein kleinster Spalt mit nur 10 µm Öffnungsweite stellt eine große Öffnung für 1µm große Partikel dar. Solche feinen Partikel weisen in der Luft eine hohe Konzentration auf, üblich sind 1.000 bis 10.000 Nanopartikel pro Kubikzentimeter. Im Straßenverkehr kann diese Konzentration auf 107 pro Kubikzentimeter anwachsen. Es ist daher leicht vorstellbar, dass kleine Partikel unkontrolliert in die Streulichteinheit einwandern können, die diese innen verschmutzen und eine zu messende Probe verunreinigen können, wenn die Streulichteinheit nicht hermetisch abgedichtet wird. Ein Vorteil dieses Verfahrens ist auch, dass die Streulichteinheit jederzeit neu kalibriert werden kann. Hierfür wird in einer Weiterentwicklung des Verfahrens entweder beim absperrbaren Fluideinlass oder beim absperrbaren Fluidauslass ein, mittels eines durchströmten Nullfilters gefiltertes, nahezu partikelfreies Fluid, das vorzugsweise durch eine Pumpeinheit gefördert wird, in das Messvolumen eingebracht und eine vorbestimmbare erste Anzahl von Messwerten aufgenommen, welche als Nullniveau gespeichert wird. Ein Nullfilter filtert idealerweise alle Partikel, die größer als Gasmoleküle sind, aus der Luft heraus, tatsächliche Nullfilter filtern zumindest alle Partikel, die größer als 0,2µm sind, aus der Luft heraus. Ein damit gefiltertes Fluid wie Luft kann somit als partikelfrei angesehen werden. Die Pumpeinheit ist vorzugsweise als Membran-Pumpe ausgestaltet, die, wenn sie nicht im Pumpbetrieb ist, wie ein Absperrventil abdichtet. Alternativ dazu kann auch eine andere Pumpe verwendet werden, welche mit einem zusätzlichen Absperrventil versehen ist.

Vorteilhaft können noch vor dem Aufnehmen der vorbestimmbaren ersten Anzahl von Messwerten und deren Speichern als Nullniveau der Fluideinlass und Fluidauslass manuell oder automatisch abgesperrt werden. Besonders vorteilhaft wird jedoch zum Aufnehmen der ersten Anzahl von Messwerten eine Strömung in der Streulichteinheit erzeugt. Dies erfolgt mittels eines ersten Bypasses, der Pumpeinheit und eines zusätzlichen Absperrventils oder mittels eines zweiten Bypasses und einer zusätzlichen Pumpeinheit.

Der Bypass kann über separate Ventile zu geschaltet werden und lässt das Fluid zirkulieren. In dem Verfahren werden die erste und/oder zweite Absperrvorrichtung geöffnet, das Messvolumen mit dem zu untersuchenden Fluid beaufschlagt und die erste und/oder zweite Absperrvorrichtung geschlossen. Vorteilhafterweise wird auch hier in der nun wieder vollständig hermetisch abgedichteten Streulichteinheit eine Strömung erzeugt, wodurch das zu untersuchende Fluid zirkulieren kann. Für das Aufnehmen der vorbestimmbaren ersten Anzahl von Messwerten ist es auch hier vorteilhaft, wenn dies während der Strömung durchgeführt wird. Diese Weiterentwicklung des Verfahrens hat gegenüber dem Aufnehmen der Messwerte bei geöffnetem Fluidein- und Auslass, den Vorteil, dass eine zu untersuchende Fluidprobe über einen längeren Zeitraum untersucht werden kann.

Das erfindungsgemäße Verfahren kann weiter verbessert werden, wenn die Streulichteinheit, insbesondere während dem Aufnehmen der Messwerte, vom zu untersuchenden Fluid, vorzugsweise unter Verwendung einer Saugeinheit oder der Pumpeinheit, mit möglichst konstanter Strömungsgeschwindigkeit durchströmt wird. Zweckmäßig werden im dem Verfahren die Streulichteinheit und ein oder mehrere Subsysteme mittels eines Mikroprozessors angesteuert und entsprechende Messdaten der Lichtempfangseinheit und weiterer Sensoren ausgewertet und nachverarbeitet und mittels Anzeigeeinheiten die Ergebnisse der Auswertung und/oder der Nachverarbeitung visualisiert. Zu solchen Subsystemen können weitere Sensoren wie Feuchtigkeits-, Druck-, Strömungs,- und Gassensoren gehören. Durch die Einbeziehung der Messwerte dieser zusätzlichen Sensoren in die Auswertung kann das Messergebniss der Messdaten der Lichtempfangseinheit weiter verbessert werden. Außerdem können die Daten der Subsysteme eigenständig verarbeitet und zur Anzeige gebracht werden.

Durch die Ansteuerung der Lichtsendeeinheit mittels eines Mikroprozessors wird es möglich, Lichtpulse, die von der Lichtsendeeinheit abgegeben werden, sowohl nach Pulsweite, Pulshöhe und/oder Pulsfrequenz frei wählbar und einstellbar zu erzeugen. Dadurch kann man z. B. der Degradation von der Lichtsendeeinheit entgegenwirken.

Ein weiterer Aspekt der Erfindung, der einerseits zur Verbesserung des zuvor beschriebenen Verfahrens beiträgt, andererseits aber auch alleine das Potential aufweist, die Messung von Partikelkonzentrationen zu verbessern, äußert sich darin, dass bei der ersten Anzahl von Messwerten die Messwerte nach deren Größe, insbesondere aufsteigend vom kleinsten Messwert zum größten Messwert, sortiert werden. Die Sortierung ermöglicht das Ausnutzen von statistischen Effekten, die sich beim integralen Messen von Partikelkonzentrationen ergeben, bei dem sich während der Messung mehrere Partikel innerhalb des Messvolumens befinden.

Dieser Aspekt der Erfindung weist auch alleine das Potential auf, die Messung von Partikelkonzentrationen zu verbessern und äußert sich entsprechend in einem Verfahren zur Messung von Partikelkonzentrationen, insbesondere Feinstaubkonzentrationen, unter Verwendung eines optischen Streulicht-Partikelmesssystems umfassend eine photometrische Streulichteinheit mit einem Messvolumen, wobei die Streulichteinheit besteht aus mindestens einem Lichtsender, der, insbesondere gepulste, Lichtsignale aussendet, und einem unter mindestens einem Winkel angeordneten lichtempfindlichen Empfängersystem, das das gestreute Licht der Partikel, welche die Partikelkonzentration bilden, empfängt, wobei Signale der Lichtempfangseinheit erfasst werden und bei einer ersten Anzahl der erfassten Signale die zugehörigen Messwerte nach deren Größe, insbesondere aufsteigend vom kleinsten Messwert zum größten Messwert, sortiert werden. Vorzugsweise wird zum Bilden der ersten Anzahl von Messwerten in den zuvor beschriebenen Verfahren zunächst eine vorgebbare zweite Anzahl von Messwerten aufgenommen. Aus dieser vorgebbaren zweiten Anzahl von Messwerten der Signale wird ein charakteristischer Wert gewonnen, der vorzugsweise ein Maximum oder Mittelwert sein kann. Dieser charakteristische Wert der zweiten Anzahl von Messwerten wird dann als einer der Messwerte der ersten Anzahl von Messwerten verwendet.

Vorteilhafterweise wird in den erfindungsgemäßen Verfahren mindestens ein Teil aus sortierten Messwerten der ersten Anzahl von Messwerten in mindestens einem frei wählbaren, insbesondere per Software einstellbaren, Messfenster zusammengefasst und entsprechenden Partikelkonzentrationen zugeordnet. So wird z. B. dem 51. der sortierten Werte die Konzentration 109 µg/m³ zugewiesen, wenn dessen Amplitudenwert 650 Einheiten beträgt, während z. B. dem 90. - 93. Wert die Konzentration 109 µg/m³ zugewiesen wird, wenn deren Amplitudenwert ca. 700 Einheiten beträgt.

Zum Kalibrieren des Messsystems, das zur Ausübung der erfindungsgemäßen Verfahren verwendet wird, wird die erste Anzahl der Messwerte bei einer Partikelkonzentration nahe Null µg/m³, vorzugsweise kleiner 1 µg/m³ erfasst. Nach dem Sortieren der ersten Anzahl von Messwerten wird mindestens ein Teil daraus für einen PM-Wert als Nullniveau abgespeichert. Außerdem kann noch ein zweiter Teil der sortierten ersten Anzahl von Messwerten für den gleichen PM-Wert als Nullniveau abgespeichert werden. Es ist aber auch denkbar, die Messwerte mehrerer Teile der sortierten ersten Anzahl von Messwerten für mehrere verschiedene PM-Werte als Nullniveau abzuspeichern und dadurch eine Nullkalibrierung des Partikelmesssystems, insbesondere Feinstaubmessystems, vorzunehmen. Zum Beispiel kann bei der Konzentration von 0 µg/m³ der Messwert 600 des 50. und 51. Wertes (Messwertnummer) der sortierten ersten Anzahl von Messwerten als Nullniveau für den PM-Wert 2,5 gespeichert werden. Ebenso kann der Messwert 610 der 67. Messwertnummer der sortierten Werte als Nullniveau für den PM-Wert 2,5 gespeichert werden. Alternativ dazu können auch der Messwert 600 der 50. und 51. der sortierten Werte als Nullniveau für den PM-Wert 1, der Messwert 610 des 67. der sortierten Werte als Nullniveau für den PM-Wert 2,5 und der Wert 633 des 95. Wertes der sortierten Werte als Nullniveau für den PM-Wert 10 gespeichert werden.

Dabei entspricht ein PM-Wert bzw. Particulate-Matter-Wert der mittleren Größe von Partikeln in einer Partikelkonzentration. So bedeutet PM0.1 ultra feine Partikel (UFP) mit einer mittleren Größe von nur 100 nm. Entsprechend stehen PM1.0, PM2.5 und PM10 für Konzentrationen von mittleren Teilchengrößen mit 1, 2.5 und 10 µm. In diesem Zusammenhang können die PM-Werte auch so definiert sein, dass Partikelfraktionen mit niedrigen Werten also PM1 in der Fraktion mit dem jeweils höheren Wert wie z. B. PM2,5 enthalten sind, so dass PM1 Partikel enthält, die kleiner als 1 µm sind, während PM2,5 Partikel enthält, die kleiner als 2,5µm sind.

Um später aus den Messwerten auf Partikelkonzentrationen schließen zu können, wird für jeden PM-Wert eine eigene Kalibrierfunktion festgelegt z. B. [Messwert x Konstante x ((2,5µg/m³)/Messeinheit)-Nullniveau]. Diese Kalibrierfunktion kann z. B. durch Vergleich mit Messwerten eines Referenzgerätes z. B. einem Partikelzähler ermittelt werden. So erhält man z. B. die aktuelle Partikelkonzentration für PM2,5 durch Berechnung der Kalibrierfunktion für PM2,5, indem man 65. Wert der aktuellen Messung in die Kalibrierfunktion eingesetzt, wenn man beim Zuordnen der PM-Werte dem 65. Wert den PM-Wert 2,5 zugeordnet hat.

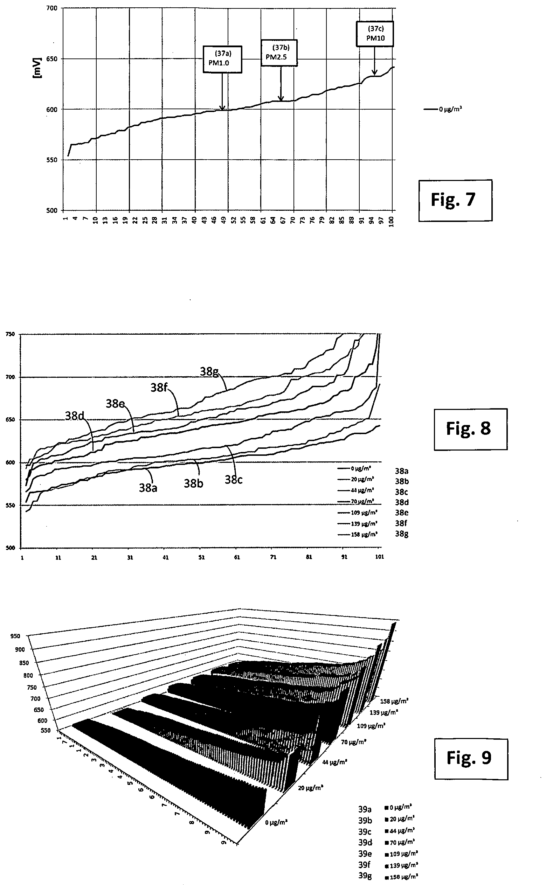

Die PM-Werte werden in der sortierten Anordnung der aktuellen Messwerte so positioniert, dass die jeweiligen mittleren Teilchengrößen mit der Messwertnummer korrelieren. In Fig. 7 ist beispielsweise erkennbar, dass die Messwertnummer (X-Achse) von links nach rechts zunimmt und korrelierend hierzu die mittleren Teilchengrößen 1,0, 2,5 und 10 ebenfalls von links nach rechts zunehmen.

Eine besonders genaue Kalibrierung erhält man dann, wenn das Partikelmesssystem mittels monodispersen Partikelverteilungen und/oder realen Staubverteilungen bei unterschiedlichen Partikelkonzentrationen, insbesondere Feinstaubkonzentrationen, kalibriert werden kann und neue Kalibrierwerte wie Nullniveaus, Parameter von Kalibrierkurven und Gravimetriefaktoren, insbesondere für jeden PM-Wert separat, abgespeichert werden. In einer Weiterentwicklung des erfindungsgemäßen Verfahrens werden von Zeit zu Zeit, vorzugsweise regelmäßig, Nullniveaumessungen wiederholt. Durch einen Vergleich der aktuellen Nullniveaus mit vorangegangenen Nullniveaus wird die Degradation der Streulichteinheit bestimmt, und die Feinstaubmesswerte werden entsprechend korrigiert. Die Erfindung zeigt sich auch in einer Vorrichtung zur Messung und Anzeige von verschiedenen Partikelkonzentrationen z. B. Feinstaub-konzentrationen, was vorzugsweise simultan für verschiedene PM-Werte erfolgt. Dabei können die Partikelkonzentrationen in einer aus mindestens zwei Phasen bestehenden Strömung vorliegen. Die Vorrichtung umfasst eine, vorzugsweise gepulst betriebene, photometrische Streulichteinheit. Die Streulichteinheit besteht aus mindestens einer Lichtsendeeinheit, die, vorzugsweise gepulste, Lichtsignale aussendet, und aus mindestens einem unter einem oder mehreren Winkeln angeordneten lichtempfindlichen Empfängersystem, das das gestreute Licht der Partikel empfängt. Erfindungsgemäß ist die Streulichteinheit mit Messvolumen zunächst mit Ausnahme eines Fluideinlasses und Fluidauslasses hermetisch dicht, und die Streulichteinheit ist mit Messvolumen an dem Fluideinlass und Fluidauslass mit Absperreinheiten versehen, mittels derer der Fluideinlass und Fluidauslass manuell oder automatisch absperrbar sind. Die hermetische Dichtigkeit ist wichtig, da sonst Partikel, durch vorhandene Spalten, unkontrolliert in die Streulichteinheit eindringen können und die Streulichteinheit verschmutzen bzw. das zu untersuchende Fluid kontaminieren können.

Vorteilhaft kann es sich auswirken, dass sich in der Streulichteinheit nach der Lichtsendeeinheit und/oder vor der Lichtempfangseinheit optische Fokussier-systeme befinden, mit denen sich Lichtstrahlen aufweiten und/oder kollimieren bzw. fokussieren lassen. Ebenso vorteilhaft ist es, dass sich in der Streulichteinheit gegenüber der Lichtsendeeinheit ein optischer Sumpf befindet, der das nicht gestreute Licht absorbiert. Ferner ist es zweckmäßig, wenn zur Aussendung von Lichtsignalen Laser, Halbleiterdioden, Weißlicht und/oder Blitzlicht beziehungsweise zum Empfangen des gestreuten Lichts Photodioden, Phototransistoren, Photomultiplier und/oder photosensitive CMOS-Chips verwendet werden.

Die Erfindung betrifft auch eine Vorrichtung zur, insbesondere simultanen, Messung und Anzeige von verschiedenen Partikelkonzentrationen, insbesondere Feinstaubkonzentrationen, vorzugsweise in einer aus mindestens zwei Phasen bestehenden Strömung, umfassend eine, insbesondere gepulste, photometrische Streulichteinheit, bestehend aus mindestens einer Lichtsendeeinheit, die, insbesondere gepulste, Lichtsignale aussendet, und mindestens einem unter einem oder mehreren Winkeln angeordneten lichtempfindlichen Empfängersystem, das das gestreute Licht der Partikel empfängt. Diese Vorrichtung umfasst eine Steuerungs- und Auswerteeinheit, die eingerichtet ist, wiederholt eine vorbestimmbare erste Anzahl von Messwerten aufzunehmen, und die aufgenommenen Messwerte der ersten Anzahl von Messwerten nach deren Größe, insbesondere aufsteigend vom kleinsten Messwert zum größten Messwert, zu sortieren.

Die Figuren zeigen jeweils im Einzelnen:
Die Fig.1 zeigt eine schematische Übersicht des Streulichtsystems.
Fig.2 zeigt das optische Messsystem mit Sender, Empfänger, Lichtfalle und Fokussiereinrichtungen.
Fig.3 zeigt eine erweiterte Darstellung der Figur 1 mit zusätzlichen Subsystemen.
Fig.4 zeigt einige Lichtsendepulse und Fig.5 dazugehörige Empfangspulse.
Fig.6 zeigt eine sortierte Reihe von Messwerten mit zugeordneten PM-Werten.
Fig.7 zeigt ebenfalls eine sortierte Reihe von Messwerten mit zugeordneten PM-Werten.
Fig.8 zeigt sortierte Messreihen bei unterschiedlichen Partikelkonzentrationen.
Fig.9 zeigt dieselben Messreihen wie Fig.8 in dreidimensionaler Darstellung.
Fig.10 zeigt eine Messreihe, die mit verschiedenen Messgeräten in einer Küche aufgenommen wurde, u. a. mit mehreren erfindungsgemäßen Messgeräten und einem hochgenauen Partikelzähler als Referenzgerät.
Fig.11 zeigt eine Korrelationsgerade zum Vergleich des erfindungsgemäßen Messgerätes mit dem Referenzmessgerät.
Fig.12 zeigt eine Korrelationsgerade zum Vergleich zweier erfindungsgemäßer Messgeräte untereinander.
Fig.13 zeigt die simultane Messung von drei PM-Fraktionen PM1, PM2.5 und PM10.
Fig.14 zeigt die gemessene Degradation einer Sendediode in Prozent im Zeitraum bis 10.000 Stunden.
Fig.15 zeigt ein erfindungsgemäßes Messsystem, bei dem zusätzlich, innerhalb des Systems, generiertes, partikelfreies Fluid, insbesondere trockene Luft, auf die optischen Komponenten geleitet wird.

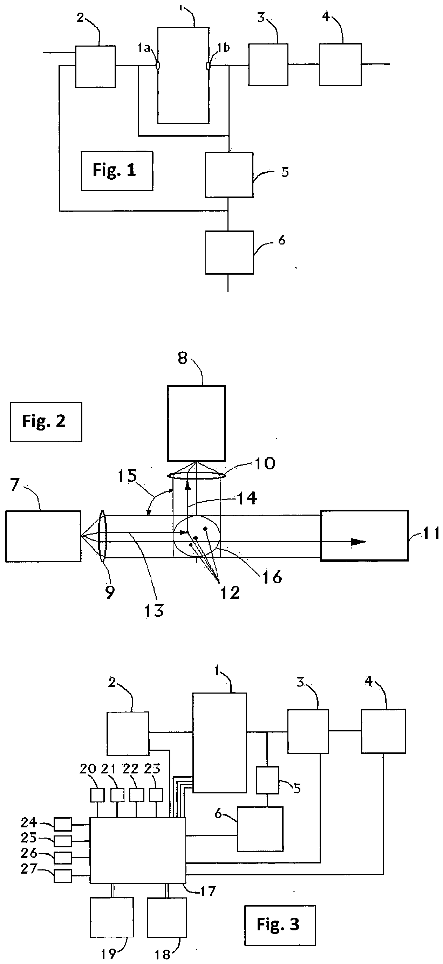

Das "Particulate Matter"-Messsystem, kurz PM-Messsystem ist schematisch in Fig.1 dargestellt. Es besteht im Wesentlichen aus einer photometrischen Streulichteinheit 1 mit einem vorzugsweise runden Einlass 1a und einem vorzugsweise runden Auslass 1 b. Die photometrische Streulichteinheit wird zunächst bis auf den Einlass 1a und den Auslass 1b vollständig hermetisch abgedichtet, was z. b. durch Abkleben von Spalten und Fugen mit luftdichten Folien erfolgen kann. Bei diesem Messsystem können zusätzlich sowohl der Einlass mit einem Einlassventil 2 und auch der meist 180 Grad gegenüberliegende Auslass mit einem Auslassventil 3 hermetisch verschlossen werden. Dazu eignen sich vorzugsweise Magnetventile, die leicht durch einen Mikroprozessor angesteuert werden können. Es eignen sich jedoch auch andere Ventilbauarten oder Absperrsysteme. Zwischen Auslassventil 3 und Auslass der Streulichteinheit ist mittels eines T-Stückes ein so genanntes Nullfilter 5 zwischengeschaltet. Ein Nullfilter filtert idealerweise alle Partikel, die größer als Gasmoleküle sind, aus dem Fluid heraus, tatsächliche Nullfilter filtern zumindest alle Partikel, die größer als 0,2µm sind, aus dem Fluid heraus. Dieses Nullfilter kann durch eine elektrische Pumpeinheit 6 mit Umgebungsfluid, insbesondere -luft beaufschlagt werden. Dieses Subsystem ist wesentlich, um eine hohe Genauigkeit bei der Messung der PM-Werte von 1 - 2 µg/m³ zu erzielen. Bei geöffneten Ventilen sorgt eine Saugeinheit 4, vorzugsweise ein kleiner leiser Axiallüfter, für den Volumenstrom von, vorzugsweise etwa 1 Liter/min, durch die Streulichteinheit.

Das hier beschriebene, sehr genaue Messverfahren beginnt vorzugsweise mit einem Selbsttest, in dem die Umgebungstemperatur, -luftfeuchtigkeit, -druck, die Temperatur der Messzelle und eine so genannte Nullkalibrierung den eigentlichen Messungen vorgeschaltet sind. Dieser Systemtest benötigt ca. 30 bis 60 Sekunden. Dabei werden mittels eines leistungsfähigen Mikrocomputers vorzugsweise vier Messsensoren abgefragt, welche als Subsysteme in das Gesamtsystem eingefügt sind. Zusätzlich wird das Auslassventil 3 angesteuert, das den Einlass des Sauggebläses 4, vorzugsweise ein leiser Axiallüfter, verschließt. Es kann aber auch eine kleine Vakuumpumpe eingesetzt werden. Durch den Überdruck in den Luftleitungen wird die Streulichteinheit mit partikelfreier Luft, vorzugsweise keine Partikel größer 0,2µm, gespült. Der Einlass 1a dient in diesem Fall als Auslass. Nach kurzer Zeit, vorzugsweise 20 Sekunden, wird auch das Einlassventil 2 geschlossen. In der Streulichteinheit befinden sich nun keine Partikel, die größer 0,2µm sind. Diese geringe Feinstaubkonzentration, kleiner 1 µm/m³, dient nun als NullNiveau. Bevor das Messverfahren genauer beschrieben wird und auch die detaillierte Signalverarbeitung, wird nun folgend das photometrische System beschrieben.

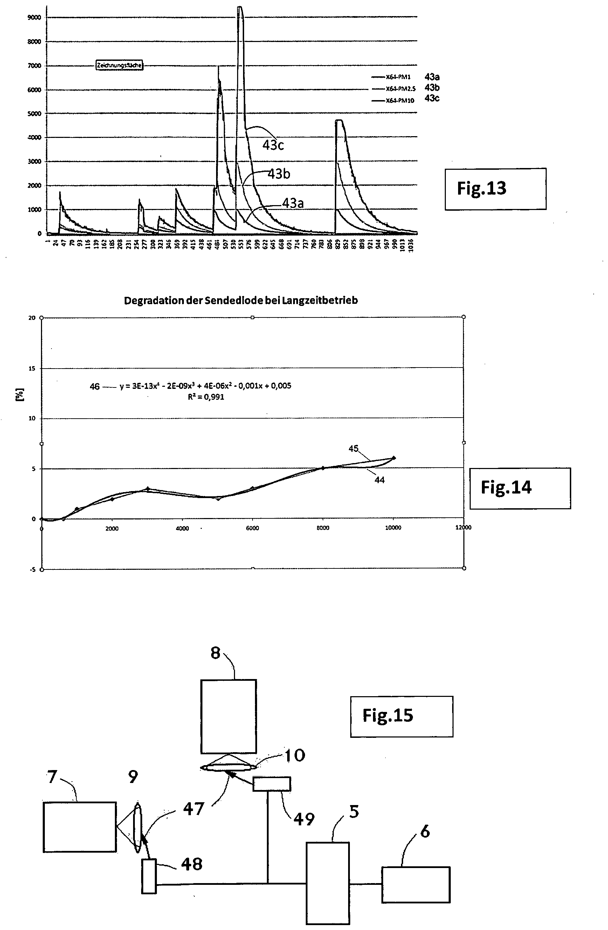

Als Basis eines Streulichtphotometers 1 dient eine Lichtsendeeinheit 7, die Licht in einer speziellen Wellenlänge aussendet, z.B. Laser oder Halbleiterdioden im Wellenlängenbereich 250 bis 900 nm, aber auch Weißlicht oder Blitzlicht eignet sich dazu. Dieses Licht wird unter einem gewissen Winkel, Fig.2, 15, z.B. zwischen 90° bis 135° zur Lichtempfangseinheit auf partikeltragende Luft abgestrahlt. Trifft nun das abgestrahlte Licht, z. B. als Lichtstrahl 13, auf die Oberfläche des Partikels 12, wird entsprechend seiner Oberfläche und Größe sowie dessen Rauhigkeit, Albedo, Form, Durchmesser etc. ein Anteil dieses Lichtes gestreut. Mit einer Lichtempfangseinheit 8 kann man nun dieses Streulicht detektieren und in ein elektrisches Signal umwandeln und zur weiteren Verarbeitung verstärken. Nach der Lichtsendeeinheit 7 und vor der Lichtempfangseinheit befinden sich optische Fokussiersysteme 9 und 10. Vorzugsweise können auch einfache Linsen verwendet werden. Als lichtempfindliche Empfänger 8 dienen meist Photodioden, Phototransistoren oder Photomultiplier. Auch ein photosensitiver CMOS-Chip, wie er in vielen Digitalkameras eingesetzt wird, eignet sich dazu. Das entwickelte Verfahren eignet sich für sämtliche Varianten, wobei in dieser Entwicklung vorzugsweise eine preiswerte Photodiode und ein Phototransistor Anwendung finden.

Das PM-Messsystem ist in Fig.3 schematisch dargestellt. Der Kern dieses Systems ist ein leistungsfähiger Mikroprozessor 17 mit zahlreichen elektrischen Ein-und Ausgängen. Mittels Puls-Weiten-Modulation, PWM-Verfahren, werden die ent-sprechenden Pulse 28, der Länge 29 und Frequenz 31 für die Lichtsendeeinheit generiert und dem Streulichtphotometer 1 zugeführt. Mittels eines schnellen A/D-Wandlers, vorzugsweise 1 MHz Abtastfrequenz, werden die Maximalamplituden ab-getastet und das lokale Maximum bestimmt und mittels einer schnellen Sortierroutine in einen Zwischenspeicher abgelegt.

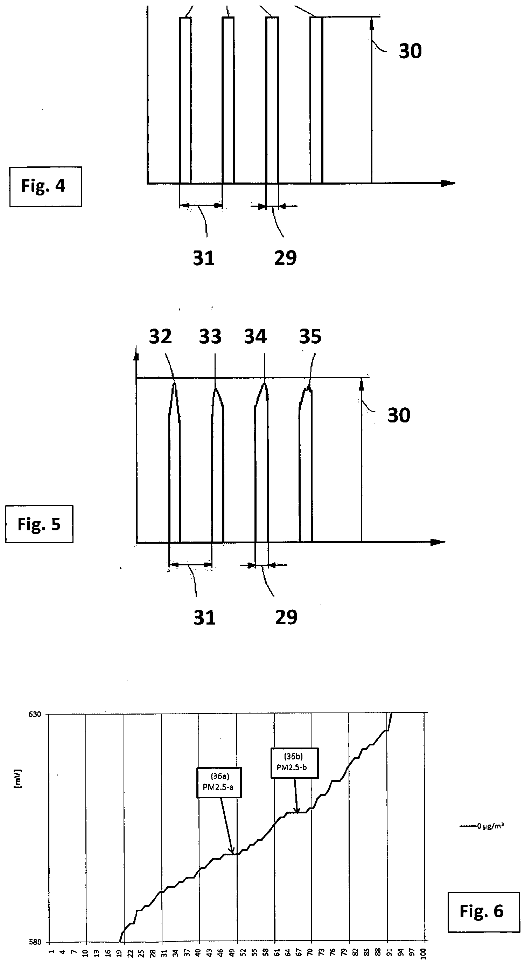

Um die Genauigkeit bei der Bestimmung einer Feinstaubkonzentration zu erhöhen, ist ein kurzes Sendesignal 28, Fig.4 oder ein Lichtpuls erforderlich (etwa 10 bis 300 µs lang, Pos. 29), der bzw. das mit einer hohen Frequenz 31 (etwa 0,1 KHz
bis 0,1 MHz-Bereich) abgestrahlt wird, alternativ dazu kann auch das Empfangssignal mit einer hohen Abtastrate abgetastet werden. Zusätzlich ist eine homogene Fluidströmung mit einem konstanten Volumenstrom sinnvoll. Übliche Volumenströme in der Messzelle liegen bei ca. 1 ltr./min. Die Strömungsgeschwindigkeit in der Messzelle wird auf 1 cm/s genau bestimmt und die Drehzahl der Saugeinheit 4 mittels Potentiometer auf den Zielwert fein eingestellt. Die photoempfindliche Empfangseinheit 8, in diesem Fall ein preiswerter Fototransistor, empfängt nun zahlreiche Lichtpulse mit unterschiedlichen Amplituden entsprechend der Rückstreuung 14 der Partikel 12 zum Zeitpunkt der Aussendung und Dauer des Aufenthaltes im Meßvolumen 16. Die Empfangspulse 32, 33, 34, 35 in Fig.5 sind nicht rechteckförmig, sondern weisen an nicht genau vorhersagbaren Positionen ein lokales Maximum auf. Die genaue Erfassung der maximalen Amplitude ist jedoch für eine präzise Messung der Feinstaubkonzentration vorteilhaft. Dazu wird die Amplitude des empfangenen Streulichtes innerhalb der Sendezeit von vorzugsweise 10 µs bis 300µs Länge mehrmals, vorzugsweise 3 - 5 mal, abgetastet und das Maximum bestimmt, zwischengespeichert und nach Größe sortiert. Jeder einzelne Puls pro Zeiteinheit ergibt eine integrale Information über alle Partikel (0, 3µm bis > 10 µm), die sich im Messvolumen 16 aufgehalten haben. Aufgrund der natürlichen inhomogenen Feinstaubkonzentration schwanken diese Werte erheblich. Es ist leicht nachzuvollziehen, dass große Partikel, z.B. ein 10 µm großes Teilchen, etwa die 100-fache Rückstreuung hat wie ein 1 µm kleines Partikel. Da übliche Feinstaubkonzentrationen aber umgekehrt proportional viele kleine Partikel im Vergleich zu großen Partikeln aufweisen, werden in einem gewissen Zeitfenster immer wenige große und meist viele kleine Partikel im Verbund erfasst. Wählt man zum Beispiel ein Messfenster von 1 sec, erhält man bei einer Sendefrequenz bzw. Abtastfrequenz von 100 Hz bzw. 300-500 Hz 100 Amplitudenwerte, die bei diesem Verfahren nun nach Größe sortiert werden. Eine typische sortierte Verteilung ist in Fig.6 dargestellt. In Fig.6 kann man Plateaus erkennen, wie 36a und 36b, die zur Festlegung der Auflösungsgrenze, Nullniveau, herangezogen werden können, z.B. wählt man das Nullniveau in diesem Beispiel beim 48. der sortierten Werte, was etwa einer Sensor-Offset-Spannung von 600 mV entspricht. Dieses - die Offset-Spannung und die Position in der sortierten Reihe - wird einer Feinstaubkonzentration z.B. der PM2.5-a, Nullniveau, zugewiesen. Simultan dazu kann man einem zweiten Plateau, z.B. beim 67. der sortierten Werte einer zweiten PM2.5-b Verteilung, das Nullniveau 36b zuweisen. Es werden so z.B. 100 Amplitudenwerte pro Sekunde erfasst. Durch Mittelung mehrerer Messwerte lässt sich die Genauigkeit der PM2.5-Messung weiter erhöhen. Da die natürliche Feinstaubverteilung im Raum nicht homogen ist und in den meisten Fällen deutlich schwankt, +/- 1-5µg/m3, ist eine Berechnung des PM2.5- Wertes mittels gleitendem Mittelwert von vorzugsweise 10 Meßwerten sinnvoll. Der Mikroprozessor 17 steuert eine alphanumerische LED-Anzeigeeinheit 18, vorzugsweise mit 3-4 Digits, mit der der aktuelle Messwert angezeigt wird. Zusätzlich steuert dieser Mikroprozessor auch eine Lichtdiodeneinheit 19, die bei kritischen Feinstaubniveaus unterschiedliche LEDs ansteuert und aufleuchten lässt. Sinnvollerweise eignet sich dazu eine Ampelfunktion mit den Farben grün, gelb, rot. Bei PM2.5-Werten bis zu 24 µg/m3 leuchten entsprechende LEDs grün, ab 25 bis 49 µg/m3 LEDs gelb und ab 50 µg/m3 rot.

Neben der Feinstaubkonzentration werden vom Mikroprozessor auch noch wichtige Umweltdaten wie Umgebungstemperatur, -druck und - luftfeuchte mittels der entsprechenden Sensoren 20, 21, 22 bestimmt. Um die Temperaturdrift zu kompensieren, üblich sind 2 bis 4 µg/m3 pro Grad Celsius Temperaturunterschied, wird auch die Temperatur der Photometereinheit 1 mittels Temperatursensor 23 genau erfasst. Die Genauigkeit beträgt vorzugsweise 0,1 °C. Durch eine vorherige Kalibrierung des Temperaturganges der Messelektronik und der Bestimmung des Temperaturkoeffizienten lässt sich die Genauigkeit der Feinstaubmesswerte, auch in einem großen Temperaturbereich, z.B. 10 - 40°C, deutlich verbessern. Geringe Temperaturdriften von nur 0,1 µg/m3 pro Grad Celsius können damit realisiert werden. Das gleiche gilt für den Einfluss des Druckes auf das Fluidvolumen und den Einfluss der Feuchtigkeit auf die Messung der Partikelkonzentration. Mit speziellen Routinen und Kalibrierungen lassen sich negative Einflüsse durch Druckschwankungen bzw. hohe Luftfeuchtigkeit kompensieren oder zumindest stark reduzieren.

Der Mikroprozessor 17 steuert auch wichtige Schnittstellen 24, 25, 26, 27 an. Für die Kommunikation und Steuerung des Mikroprozessors mittels Terminalprogramm und zahlreichen Softwarekommandos wird vorzugsweise eine USB-Schnittstelle 24 verwendet. Mit einer zusätzlichen RS232-Schnittstelle 25 und entsprechenden handelsüblichen Adaptern können auch ein LAN-Anschluss, WIFI- oder BlueTooth zur weiteren Kommunikation realisiert werden. Ein weiterer Ausgang 26, der einen DAC digital/analog Converter nutzt, dient zur Steuerung von Geräten wie z.B. Gebläsen oder Raumluftreinigern. Mit einer speziellen Softwareroutine lassen sich der Offsetwert und die Steigung des DAC-Ausganges programmieren. Dies ist sinnvoll, da bei entsprechenden kritischen Werten z.B. ein Raumluftreiniger damit automatisch aktiviert werden kann und bei Erreichen niedriger Feinstaubkonzentrationen wieder ausgeschaltet wird (Stromsparmodus). Des Weiteren weist dieses System noch einen mehrkanaligen analogen Eingang 27 auf, mit dem weitere Parameter zur Luftqualität bestimmt werden können. Durch diese zusätzlichen Sensoren können z.B. die C02-Konzentraion als auch VOC-Bestandteile in der Luft simultan gemessen und angezeigt werden.

Der Mikroprozessor weist vorzugsweise auch eine RTC Real Time Clock auf, mit der zu jeder Messung ein Zeitstempel abgespeichert wird, vorzugsweise im Sekundentakt. Mittels einer micro-SD-Card, Speichergröße mehrere GByte, lassen sich sowohl dieses Zeitsignal als auch sämtliche Messwerte in einer Messdatei ab-speichern. Das Speichervolumen reicht für eine jahrelange Aufzeichnung sämtlicher Daten aus.

Für größere Feinstaubkonzentrationen wie z.B. PM2.5 wählt man vorzugsweise ein Plateau etwa bei dem 65. der sortierten Werte und für hohe PM10 Werte etwa beim 95. Wert. Dieses Verfahren lässt nun sowohl die Bestimmung von Einzel-Feinstaubkonzentrationen zu, wie z.B. nur eine PM2.5 37b, als auch die simultane Bestimmung weiterer Feinstaubkonzentrationen bzw. Feinstaubfraktionen wie PM1.0 37a und PM10 37c und das sogar im gleichen Messfenster, dargestellt in Fig.7. Mittelt man nun die Amplitudenwerte um die gewählten Zero-Offsetwerte wie den 48., 67. und den 95. mit plus/minus n-Werten, vorzugsweise 1 - 5 Werte links und rechts davon, kann durch diese Maßnahme die Genauigkeit weiter gesteigert werden. Da bei einer PM10 Konzentration die Häufigkeit von 10µm Teilchen gering ist im Vergleich zu 1 µm großen Teilchen, ist es besser, für diese Anwendung die Anzahl der zu sortierenden Amplituden von vorzugsweise 100 Stück um eine Größenordung auf etwa 1000 Stück zu erhöhen.

Bei diesem Verfahren können mittels Software sowohl die Anzahl der zu bestimmenden PM-Fraktionen (1 bis 3) als auch die Positionen der Offsetwerte mittels Softwarekommandos frei gewählt werden. Die Anzahl der zu sortierenden Messwerte ist ebenfalls frei wählbar. Vorzugsweise wurden Werte von 100, 300, 600, 900 und 6000 ausgewählt, was Messfenstern von 1, 3, 6 ,9 und 60 sec entspricht. Mittels eines speziellen Softwarekommandos lässt sich die sortierte Amplitudenverteilung pro Messfenster in einer Matrix ausgeben. Anhand dieser Matrix kann überprüft werden, ob die gewählten Bezugswerte für das Nullniveau richtig sind. Gegebenenfalls kann noch feinjustiert werden.

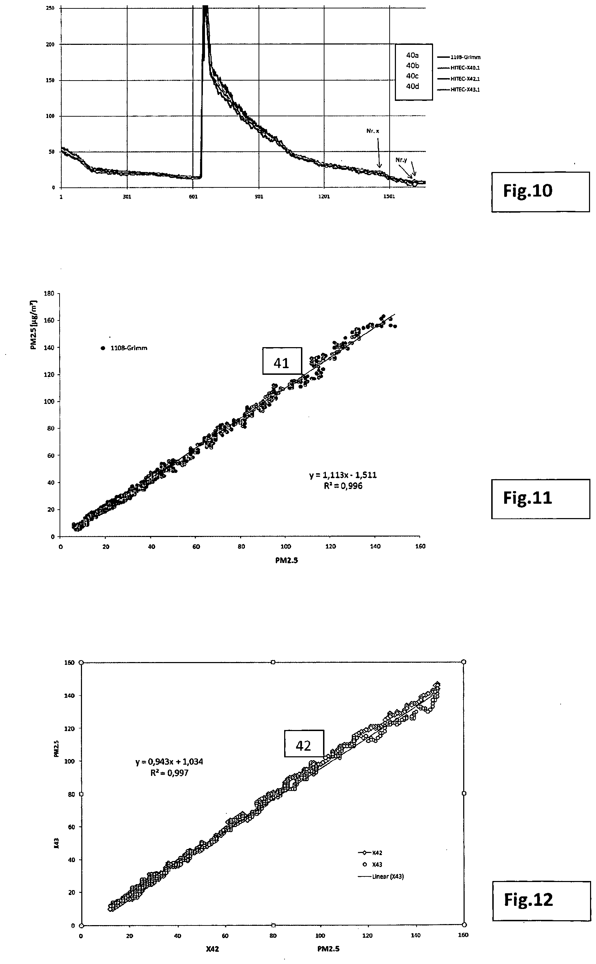

Steigert man nun die Feinstaubkonzentration, so verschiebt sich diese sortierte Verteilung entsprechend zu höheren Amplitudenwerten (650mV bis 2500mV), siehe Verteilungen 38a bis 38g in Fig 8. Diese exemplarisch ausgeführten 7 Verteilungen entsprechen PM2.5 Niveaus von 0, 20, 44, 70, 109, 139 und 158 µg/m3. In zahlreichen Kalibrierexperimenten mit monodispersen Kalibrierteilchen unterschiedlicher Dichte, Größe und Form wurden zahlreiche Verteilungen aufgenommen, untersucht und ausgewertet. Als Referenzinstrumente wurden mehrere parallel laufende hochgenaue Absolut-Aerosolspektrometer herangezogen, wie z.B. die Geräte 1.107, 1.108 und 1.109 der Fa. Grimm. Es konnte nachgewiesen werden, dass sich mit diesem innovativen Verfahren Auflösungen von 1 µg/m3 erzielen lassen und Genauigkeiten bei der Bestimmung z.B. einer PM2.5 von kleiner +/- 5 µg/m3 (üblich nur +/- 2µg/m3) in Messfenstern von 6 bis 60 Sekunden Länge und bei Konzentrationen unter 100 µg/m3, siehe Fig.10, Kurven 40a bis 40d Realmessungen in einer Küche. Für höhere Konzentrationen größer 100 bis 10000 µg/m3 wurden Genauigkeiten deutlich unter 10% des Ablesewertes realisiert. Korrelationsmessungen zwischen diesen Referenzgeräten und den ersten Prototypen zeigen Korrelationskoeffizienten von R2 10 > 0.95, üblich sind Werte um 0.98 und höher, siehe Fig.11. Bei einer sehr genauen Abstimmung wurden unter realen Bedingungen in Innenräumen sogar 0,996 erreicht, Fig.11. Der Gleichlauf zwischen mehreren Geräten korreliert ebenfalls bei Werten deutlich über R2 > 0,95, siehe Fig.12 mit R2 > 0,99. Damit konnte erstmals nach-gewiesen werden, dass die Bestimmung von Feinstaubkonzentrationen unter Real-bedingungen auch mit einem neuartigen Messverfahren und wesentlich preiswerterer Messtechnologie möglich ist.

In weiteren Kalibriermessungen mit Dolomitpartikeln, dargestellt in Fig.13, wurde die simultane Messung von drei PM-Fraktionen PM1 (43a), PM2.5 (43b) und PM10 (43c) validiert.

Die Laborergebnisse und Messungen unter Realbedingungen sind sehr viel-versprechend. Um dieses Messverfahren auch langzeitstabil und robust zu gestalten, ist die Degradation der Lichtsendeeinheit zu berücksichtigen. Bei z.B. 100 Lichtpulsen pro Sekunde ergeben sich bei 8 Stunden Betrieb pro Tag immerhin 2,88 Mio. Pulse. In Fig.14 ist die gemessene Degradation einer Sendediode (45) in Prozent im Zeitraum bis 10.000 Stunden aufgetragen. Diese beträgt nach 10.000 Stunden, also nach 1.250 8h-Tagen oder 10,8 Mrd. Pulsen, etwa 6%. Dieser Verlauf lässt sich mittels eines Polynoms 4.Grades (46) sehr gut nähern. Erfasst man die Betriebsdauer mittels der RTC-Real Time Clock, kann dieser Effekt über einen langen Zeitraum, etwa 3,5 Jahre, sehr gut kompensiert werden. Üblich sind jedoch zwischenzeitliche Kalibrierungen, spätestens nach einem Jahr (2.500-3.000 Betriebsstunden, bei einem 8h-Tag).

Ein weiterer Einfluss auf die Genauigkeit des Messsystems kann die Verschmutzung der Optik (9) und (10) sein. Um dies zu verhindern, werden bei diesem System die Optiken mit einer partikelfreien Scher-Strömung (47), vorzugsweise aus Schlitzdüsen (48 und 49), beaufschlagt, Fig.15. Die partikelfreie Strömung wird teilweise durch die Pumpeinheit (6) mit einem nachgeschalteten sogenannten Nullfilter 5 erzeugt. Dieses Verfahren verhindert zuverlässig eine schleichende Verschmutzung der Optik bzw. Linsen, da sich die Kleinstpartikel nicht gegen diese Strömung bewegen können. Damit wird die Optik zuverlässig partikelfrei gehalten. Zusätzlich kann die Optik (9) und (10) mit einer speziellen Beschichtung aus Nanopartikeln ausgeführt sein, die staubabweisend ist.

## Patentansprüche

1. Verfahren zur Messung von verschiedenen Partikelkonzentrationen unter Verwendung eines Partikelmesssystems, umfassend eine photometrische Streulichteinheit (1) mit einem Messvolumen (16), wobei die Streulichteinheit (1) aus mindestens einem Lichtsender (7) besteht, der gepulste Lichtsignale aussendet (13), und aus mindestens einem unter mindestens einem Winkel (15) angeordneten lichtempfindlichen Empfängersystem (8), das das gestreute Licht (14) der Partikel (12), welche die Partikelkonzentration bilden, empfängt,
**dadurch gekennzeichnet, dass** die Streulichteinheit (1) mit Messvolumen (16) mit Ausnahme wenigstens eines Fluideinlasses (1a) und/oder wenigstens eines Fluidauslasses (1b), welche mit Absperreinrichtungen (2, 3) versehen sind, hermetisch abgedichtet wird, wobei die Streulichteinheit (1) mit Messvolumen (16) mit einer Probe des zu untersuchenden Fluides beaufschlagt wird und die erste und/oder zweite Absperrvorrichtung (2, 3) geschlossen werden und in der vollständig hermetisch abgedichteten Streulichteinheit (1) eine Strömung des zu untersuchenden Fluides erzeugt wird und eine vorbestimmbare erste Anzahl von Messwerten aufgenommen wird.

2. Verfahren nach Anspruch 1, **dadurch gekennzeichnet, dass** zum Kalibrieren der Streulichteinheit entweder beim absperrbaren Fluideinlass (1a, 2) oder beim absperrbaren Fluidauslass (1b, 3) ein, mittels eines durchströmten Nullfilters (5) gefiltertes, nahezu partikelfreies Fluid, das durch eine Pumpeinheit (6) gefördert wird, in das Messvolumen (16) eingebracht wird und die vorbestimmbare erste Anzahl von Messwerten aufgenommen wird, welche als Nullniveau gespeichert werden.

3. Verfahren nach Anspruch 1 oder 2, **dadurch gekennzeichnet, dass** der Fluideinlass (1a) mittels einer ersten Absperreinrichtung (2) und der Fluidauslass (1b) mittels einer zweiten Absperreinrichtung (3) manuell oder automatisch abgesperrt werden und in der vollständig hermetisch abgedichteten Streulichteinheit (1) eine Strömung des nahezu partikelfreien Fluides erzeugt wird und/oder die vorbestimmbare erste Anzahl von Messwerten aufgenommen wird, welche als Nullniveau gespeichert werden.

4. Verfahren nach Anspruch 3, **dadurch gekennzeichnet, dass** die erste und/oder zweite Absperrvorrichtung geöffnet werden, das Messvolumen (16) mit dem zu untersuchenden Fluid beaufschlagt wird, die erste und/oder zweite Absperrvorrichtung geschlossen werden und in der vollständig hermetisch abgedichteten Streulichteinheit (1) eine Strömung des zu untersuchenden Fluides erzeugt wird und/oder die vorbestimmbare erste Anzahl von Messwerten aufgenommen wird.

5. Verfahren nach einem oder mehreren der Ansprüche 1 bis 4, **dadurch gekennzeichnet, dass** die Streulichteinheit (1) vom zu untersuchenden Fluid unter Verwendung einer Saugeinheit (4) oder der Pumpeinheit (6) mit möglichst konstanter Strömungsgeschwindigkeit durchströmt wird.

6. Verfahren nach einem oder mehreren der Ansprüche 1 bis 5, **dadurch gekennzeichnet, dass** die Streulichteinheit (1) und ein oder mehrere Subsysteme (2, 3, 4, 6, 18, 19, 20, 21, 22, 23, 24, 25, 26, 27) mittels eines Mikroprozessors (17) angesteuert werden, entsprechende Messdaten der Lichtempfangseinheit (8) und weiterer Sensoren (20, 21, 22, 23), welche Teile der Subsysteme darstellen, ausgewertet und nachverarbeitet und mittels Anzeigeeinheiten (18, 19) die Ergebnisse der Auswertung und/oder der Nachverarbeitung visualisiert werden und/oder, dass die Lichtsendeeinheit (7), insbesondere mittels eines Mikroprozessors, (17) angesteuert wird und Lichtpulse (28) sowohl nach Pulsweite (29), Pulshöhe (30) und Pulsfrequenz (31) frei wählbar und einstellbar erzeugt.

7. Vorrichtung zur simultanen Messung und Anzeige von verschiedenen Partikelkonzentrationen, umfassend eine photometrische Streulichteinheit (1), bestehend aus mindestens einer Lichtsendeeinheit (7), die gepulste Lichtsignale aussendet (13), und mindestens einem unter einem oder mehreren Winkeln (15) angeordneten lichtempfindlichen Empfängersystem (8), das das gestreute Licht (14) der Partikel (12) empfängt, **dadurch gekennzeichnet, dass** die Streulichteinheit (1) mit Messvolumen (16) mit Ausnahme eines Fluideinlasses (1a) und Fluidauslasses (1b) hermetisch dicht ist und die Streulichteinheit (1) mit Messvolumen (16) mittels des Fluideinlasses (1a) und Fluidauslasses (1b) manuell oder automatisch mittels Absperreinheiten (2, 3) absperrbar ist und die Streulichteinheit (1) über einen ersten Bypass und/oder zweiten Bypass mit einer Pumpeinheit verfügt, welcher Bypass ein zu untersuchendes Fluid zirkulieren lässt.

8. Vorrichtung nach Anspruch 7, **dadurch gekennzeichnet, dass** sich nach der Lichtsendeeinheit (7) und vor der Lichtempfangseinheit (8) optische Fokussiersysteme (9, 10) befinden, mit denen sich die Lichtstrahlen aufweiten und/oder kollimieren bzw. fokussieren lassen, und sich gegenüber der Lichtsendeeinheit (7) ein optischer Sumpf (11) befindet, der das nicht gestreute Licht absorbiert.

9. Vorrichtung nach wenigstens einem der Ansprüche 7 oder 8, **dadurch gekennzeichnet, dass** zur Aussendung von Lichtsignalen (7) Laser, Halbleiterdioden, Weißlicht und/oder Blitzlicht und/oder zum Empfangen (8) des gestreuten Lichts (14, 10) Photodioden, Phototransistoren, Photomultiplier und/oder photosensitive CMOS-Chips verwendet werden.

## Claims

1. Method for measuring different particle concentrations using a particle measurement system, comprising a photometric scattered-light unit (1) having a measurement volume (16), wherein the scattered-light unit (1) consists of at least one light transmitter (7), which emits (13) pulsed light signals, and of at least one light-sensitive receiver system (8), which is arranged under at least one angle (15) and receives the scattered light (14) of the particles (12) that form the particle concentration,
**characterized in that** the scattered-light unit (1) having the measurement volume (16) is hermetically sealed with the exception of at least one fluid inlet (1a) and/or at least one fluid outlet (1b), which are provided with shut-off devices (2, 3), wherein the scattered-light unit (1) having the measurement volume (16) receives a sample of the fluid to be investigated and the first and/or second shut-off apparatus (2, 3) is/are closed and a flow of the fluid to be investigated is generated in the completely hermetically sealed scattered-light unit (1) and a predeterminable first number of measurement values is recorded.

2. Method according to Claim 1, **characterized in that** a nearly particle-free fluid, which has been filtered by flowing through a zero filter (5) and is transported through a pump unit (6), is introduced into the measurement volume (16) either at the fluid inlet (1a, 2) that is capable of being shut off or at the fluid outlet (1b, 3) that is capable of being shut off and the predeterminable first number of measurement values is recorded, which are stored as zero level, for calibrating the scattered-light unit.

3. Method according to Claim 1 or 2, **characterized in that** the fluid inlet (1a) is manually or automatically shut off by means of a first shut-off device (2) and the fluid outlet (1b) is manually or automatically shut off by means of a second shut-off device (3) and a flow of the nearly particle-free fluid is generated in the completely hermetically sealed scattered-light unit (1) and/or the predeterminable first number of measurement values is recorded, which are stored as zero level.

4. Method according to Claim 3, **characterized in that** the first and/or second shut-off apparatus is/are opened, the measurement volume (16) receives the fluid to be investigated, the first and/or second shut-off apparatus is/are closed and a flow of the fluid to be investigated is generated in the completely hermetically sealed scattered-light unit (1) and/or the predeterminable first number of measurement values is recorded.

5. Method according to one or more of Claims 1 to 4, **characterized in that** the fluid to be investigated flows through the scattered-light unit (1) using a suction unit (4) or the pump unit (6) with as constant a flow velocity as possible.

6. Method according to one or more of Claims 1 to 5, **characterized in that** the scattered-light unit (1) and one or more subsystems (2, 3, 4, 6, 18, 19, 20, 21, 22, 23, 24, 25, 26, 27) are controlled using a microprocessor (17), corresponding measurement data of the light-receiving unit (8) and of further sensors (20, 21, 22, 23), which represent parts of the subsystems, are evaluated and post-processed and the results of the evaluation and/or the post-processing are visualized by means of display units (18, 19) and/or **in that** the light-transmitting unit (7) is controlled in particular by means of a microprocessor (17) and generates light pulses (28) such that they are freely selectable and settable by pulse width (29), pulse height (30) and pulse frequency (31).

7. Apparatus for simultaneously measuring and displaying different particle concentrations, comprising a photometric scattered-light unit (1), consisting of at least one light-transmitting unit (7), which emits (13) pulsed light signals, and at least one light-sensitive receiver system (8), which is arranged under one or more angles (15) and receives the scattered light (14) of the particles (12), **characterized in that** the scattered-light unit (1) having the measurement volume (16) is hermetically sealed with the exception of a fluid inlet (1a) and fluid outlet (1b), and the scattered-light unit (1) having the measurement volume (16) is capable of being shut off manually or automatically by means of shut-off units (2, 3) by way of the fluid inlet (1a) and fluid outlet (1b) and the scattered-light unit (1) has a first bypass and/or second bypass with a pump unit, which bypass lets a fluid to be investigated circulate.

8. Apparatus according to Claim 7, **characterized in that** optical focusing systems (9, 10) are disposed downstream of the light-transmitting unit (7) and upstream of the light-receiving unit (8), with which optical focusing systems (9, 10) the light beams can be expanded and/or collimated or focused, and an optical bottom (11), which absorbs the non-scattered light, is located opposite the light-transmitting unit (7).

9. Apparatus according to at least one of Claims 7 and 8, **characterized in that** lasers, semiconductor diodes, white light and/or flashlight are used to emit light signals (7) and/or photodiodes, phototransistors, photomultipliers and/or photosensitive CMOS chips are used for receiving (8) the scattered light (14, 10).

## Revendications

1. Procédé permettant de mesurer des concentrations différentes de particules à l'aide d'un système de mesure de particules comprenant une unité de lumière diffusée photométrique (1), qui présente un volume de mesure (16), l'unité de lumière diffusée (1) étant constituée d'au moins un émetteur de lumière (7) qui émet des signaux lumineux pulsés (13) et d'au moins un système de récepteur photosensible (8) qui est agencé en formant au moins un angle (15) et qui reçoit la lumière diffusée (14) des particules (12) qui forment la concentration de particules, **caractérisé en ce que** l'unité de lumière diffusée (1), qui présente un volume de mesure (16), est hermétiquement étanchéifiée à l'exception d'au moins un orifice d'entrée de fluide (1a) et/ou d'au moins un orifice de sortie de fluide (1b) qui est (sont) pourvu(s) de dispositifs d'obturation (2, 3), dans lequel l'unité de lumière diffusée (1), qui présente un volume de mesure (16), est soumise à l'action d'un échantillon du fluide à examiner et le premier et/ou le second dispositif d'obturation (2, 3) est (sont) fermé(s) et un écoulement du fluide à analyser est produit dans l'unité de lumière diffusée (1) fermée de manière complètement hermétique, et un premier nombre prédéfinissable de valeurs de mesure est enregistré.

2. Procédé selon la revendication 1, **caractérisé en ce que**, pour calibrer l'unité de lumière diffusée, soit lorsque l'orifice d'entrée de fluide (1a, 2) peut être obturé, soit lorsque l'orifice de sortie de fluide (1b, 3) peut être obturé, un fluide pratiquement exempt de particules, filtré au moyen d'un filtre neutre (5) à travers lequel passe le flux, qui est transporté par une unité de pompage (6), est introduit dans le volume de mesure (16), et le premier nombre prédéfinissable de valeurs de mesure est enregistré en tant que niveau zéro, lesdites valeurs de mesure étant mémorisées en tant que niveau zéro.

3. Procédé selon la revendication 1 ou 2, **caractérisé en ce que** l'orifice d'entrée de fluide (1a) est obturé manuellement ou automatiquement au moyen d'un premier dispositif d'obturation (2), et l'orifice de sortie de fluide (1b) est obturé manuellement ou automatiquement au moyen d'un second dispositif d'obturation (3) et, dans l'unité de lumière diffusée (1) fermée de manière complètement hermétique, un flux de fluide pratiquement exempt de particules est produit et/ou le premier nombre prédéfinissable de valeurs de mesure est enregistré en tant que niveau zéro, lesdites valeurs de mesure étant mémorisées en tant que niveau zéro.

4. Procédé selon la revendication 3, **caractérisé en ce que** le premier et/ou le second dispositif d'obturation est (sont) ouvert(s), le volume de mesure (16) est soumis à l'action du fluide à examiner, le premier et/ou le second dispositif d'obturation est (sont) fermé(s) et dans l'unité de lumière diffusée (1) fermée de manière complètement hermétique, un écoulement du fluide à analyser est produit et/ou le premier nombre prédéfinissable de valeurs de mesure est enregistré.

5. Procédé selon l'une quelconque ou plusieurs des revendications 1 à 4, **caractérisé en ce que** le fluide à analyser passe à travers l'unité de lumière diffusée (1) à l'aide d'une unité d'aspiration (4) ou de l'unité de pompage (6) à une vitesse d'écoulement qui est aussi constante que possible.

6. Procédé selon l'une quelconque ou plusieurs des revendications 1 à 5, **caractérisé en ce que** l'unité de lumière diffusée (1) et un ou plusieurs sous-système(s) (2, 3, 4, 6, 18, 19, 20, 21, 22, 23, 24, 25, 26, 27) est (sont) commandé(s) au moyen d'un microprocesseur (17), des données de mesure correspondantes de l'unité de réception de lumière (8) et d'autres capteurs (20, 21, 22, 23), qui représentent des parties des sous-systèmes, sont évaluées et soumises à un post-traitement, et les résultats de l'évaluation et/ou du post-traitement sont visualisés au moyen d'unités d'affichage (18, 19), et/ou **en ce que** l'unité d'émission de lumière (7) est commandée, en particulier au moyen d'un microprocesseur (17), et produit des impulsions lumineuses (28) qui peuvent être sélectionnées et réglées librement en fonction de la largeur d'impulsion (29), de la hauteur d'impulsion (30) et de la fréquence d'impulsion (31).

7. Dispositif permettant de mesurer et d'afficher simultanément des concentrations différentes de particules, comprenant une unité de lumière diffusée (1) photométrique, en particulier puisée, constituée d'au moins une unité d'émission de lumière (7), qui émet des signaux lumineux pulsés (13), et d'au moins un système de récepteur photosensible (8) qui est agencé en formant un ou plusieurs angle(s) (15) et qui reçoit la lumière diffusée (14) des particules (12), **caractérisé en ce que** l'unité de lumière diffusée (1), qui présente un volume de mesure (16), est hermétiquement étanche à l'exception d'un orifice d'entrée de fluide (1a) et d'un orifice de sortie de fluide (1b) et l'unité de lumière diffusée (1), qui présente un volume de mesure (16), peut être obturée manuellement au moyen de l'orifice d'entrée de fluide (1a) et de l'orifice de sortie de fluide (1b) ou automatiquement au moyen d'unités d'obturation (2, 3) et l'unité de lumière diffusée (1) comprend une première dérivation et/ou une seconde dérivation avec une unité de pompage, ladite dérivation faisant circuler un fluide à analyser.

8. Dispositif selon la revendication 7, **caractérisé en ce que** des systèmes optiques de focalisation (9, 10) sont disposés après l'unité d'émission de lumière (7) et avant l'unité de réception de lumière (8), systèmes optiques de focalisation qui permettent d'élargir et/ou de collimater ou de focaliser les rayons lumineux, et un puits optique (11) qui absorbe la lumière non diffusée est disposé en face de l'unité d'émission de lumière (7).

9. Dispositif selon au moins une des revendications 7 ou 8, **caractérisé en ce que** l'on utilise des lasers, des diodes semi-conductrices, de la lumière blanche et/ou de la lumière stroboscopique pour l'émission de signaux lumineux (7) et/ou des photodiodes, des phototransistors, des photomultiplicateurs et/ou des puces CMOS photosensibles pour la réception (8) de la lumière diffusée (14, 10).
